# EUROPÄISCHE PATENTSCHRIFT

(11) **EP 3 378 554 B1**
(45) Veröffentlichungstag und Bekanntmachung des Hinweises auf die Patenterteilung: **02.11.2022**
(21) Anmeldenummer: 18163518.6
(22) Anmeldetag: 23.03.2018
(51) Int. Cl.: B01D 65/02

(54) **MODULFUSS, VORRICHTUNG UND VERFAHREN ZUM FILTERN EINES EINE VERSCHMUTZUNG ENTHALTENDEN ROHFLUIDS MITTELS MINDESTENS EINER MEMBRANFILTEREINHEIT SOWIE EINE VERWENDUNG HIERZU**
MODULE FLOW, METHOD AND DEVICE FOR FILTERING A RAW FLUID CONTAINING CONTAMINATION BY MEANS OF AT LEAST ONE MEMBRANE FILTER UNIT AND USE THEREOF
PIED MODULAIRE, PROCÉDÉ ET DISPOSITIF DE FILTRATION D'UN FLUIDE BRUT CONTENANT UNE IMPURETÉ AU MOYEN D'AU MOINS UNE UNITÉ DE FILTRE À MEMBRANE AINSI QUE LEUR UTILISATION

(30) Priorität: 24.03.2017 DE 102017108684
(43) Veröffentlichungstag der Anmeldung: 26.09.2018
(73) Patentinhaber: Strecker Wassertechnik GmbH, 78532 Tuttlingen-Nendingen (DE)
(72) Erfinder: Strecker, Dirk, 78532 Tuttlingen-Nendingen (DE)
(74) Vertreter: Sebastian, Jens

(56) Entgegenhaltungen:
- WO-A1-2008/028626
- WO-A1-2013/100272
- WO-A1-2015/086303

## Beschreibung

Die Erfindung betrifft einen Modulfuß für eine Vorrichtung zum Filtern von Rohfluid mittels mindestens einer Membranfiltereinheit, mit mindestens einem Druckluftbereich mit mindestens einem Druckluftzulauf und mindestens einem Rohwasserbereich mit mindestens einem Rohwasserzulauf gemäß Oberbegriff des Anspruchs 1.

Weiter betrifft die Erfindung eine Vorrichtung zum Filtern von Rohfluid mittels mindestens einer Membranfiltereinheit gemäß Oberbegriff des Anspruchs 4.

Auch betrifft die Erfindung ein Verfahren zum Filtern eines eine Verschmutzung enthaltenden Rohfluids mittels mindestens einer Membranfiltereinheit, gemäß Anspruch 5.

Nicht zuletzt betrifft die Erfindung die Verwendung eines Modulfußes in einer Filtervorrichtung zum perlenden Zuführen von Druckluft gemäß Anspruch 8.

Aus dem Stand der Technik sind allgemein Filterverfahren und Filtervorrichtungen bekannt. Zum Filtern von Rohwasser, z.B. von Quellwasser, werden Filteranlagen mit Membranfiltern verwendet, bei denen das Rohwasser mittels einer Pumpe durch Membranfilterelemente gepumpt wird. Als Membranfilterelemente können röhrenförmige Membranen aus den verschiedensten Materialien dienen, deren Wandungsstärke z. B. 0,1 bis 1,0 mm und mehr betragen kann. Beim Durchdringen dieser dünnwandigen Membranen wird das Rohwasser von Schwebstoffen und Schmutzpartikeln sowie von Viren und Bakterien und dergleichen befreit, die sich an der Oberfläche der Membranen ablagern. Zum Reinigen der Membranen erfolgt dann in regelmäßigen Zeitabständen eine Rückspülung in der Art, dass bei herkömmlichen Filteranlagen mittels einer zusätzlichen Rückspülpumpe die Membranelemente mit Reinwasser entgegengesetzt zur Filtrierrichtung beaufschlagt werden. Dabei werden die abgelagerten Schmutzpartikel an den Membranelementen abgelöst und können über eine Abwasserleitung abgeleitet werden.

Aus der DE 10 2005 033 314 A1 sind ein Verfahren und eine Filteranlage zum Filtern von Rohwasser und zum Rückspülen von Membranfiltereinheiten bekannt, wobei wenigstens zwei Membranfiltereinheiten verwendet werden, mit denen im Filtrierbetrieb aus belastetem bzw. verschmutztem Rohwasser Reinwasser erzeugt wird, wobei im Rückspülbetrieb zur Reinigung der Membranfilterelemente diese entgegengesetzt zur Filtrierrichtung mit als Spülwasser verwendetem Reinwasser beaufschlagt werden. Über eine Pumpe wird wenigstens einer im Filtrierbetrieb arbeitenden Membranfiltereinheit Rohwasser zugeführt, wobei das von wenigstens einer Membranfiltereinheit erzeugte Reinwasser in Rückspülrichtung in die rückzuspülende Membranfiltereinheit eingeleitet und dann ausgangsseitig als Spülabwasser abgeführt wird.

Aus der WO 2013/100272 A1 ist ein Modulfuß mit Rohwasserzulauf und Druckluftzulauf bekannt. Das Modul offenbart zumindest im Rückspülbetrieb eine Anordnung von Perlöffnungen.

Aus der WO 2008/028626 A1 ist ebenfalls ein Modulfuß mit Rohwasserzulauf und Druckluftzulauf bekannt. Das Modul kann in einem Rückspülbetrieb betrieben werden.

Aus der WO 2015/086303 A1 ist ebenfalls ein Modulfuß mit Rohwasserzulauf und Druckluftzulauf bekannt. Das Modul kann in einem Rückspülbetrieb betrieben werden.

Insbesondere in der WO 2015/086303 A1, die als einziges Dokument überhaupt eine Trennwand für das Modul offenbart, ist der Zulauf von Druckluft und Rohwasser getrennt ausgeführt.

Es ist eine Aufgabe der vorliegenden Erfindung, einen Modulfuß, eine Vorrichtung, ein Verfahren und eine Verwendung für ein verbessertes Filtern zu schaffen. Insbesondere ist es eine Aufgabe ein Verfahren zum Filtern von Rohwasser und zum Rückspülen von Membranfiltereinheiten zu schaffen, bei dem ein verbesserter Filtriervorgang und auch ein verbesserter Rückspülvorgang erzielt werden.

Diese und weitere Aufgaben werden gelöst durch einen Modulfuß nach Anspruch 1, eine Vorrichtung nach Anspruch 4, ein Verfahren nach Anspruch 5 und eine Verwendung nach Anspruch 8.

Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einem Modulfuß für eine Vorrichtung zum Filtern von Rohfluid mittels mindestens einer Membranfiltereinheit, mit mindestens einem Druckluftbereich mit mindestens einem Druckluftzulauf und mindestens einem Rohwasserbereich mit mindestens einem Rohwasserzulauf, vorgesehen ist, dass der Rohwasserbereich und der Druckluftbereich mittels einer Trennwand voneinander getrennt sind, wobei die Trennwand zumindest abschnittsweise mit mindestens einer Perlöffnungen als Perlator ausgebildet ist, sodass zugeführte Druckluft von dem Druckluftbereich durch die Trennwand in den Rohwasserbereich perlt. Die Trennwand ist vorzugsweise aus einem Blech hergestellt. Diese ist vorzugsweise leicht gewölbt, somit konkav bzw. konvex ausgebildet. Andere Ausführungsformen sind möglich. Die Trennwand ist vorzugsweise als Kreisscheibe ausgebildet. Die Wanddicke der Trennwand ist vorzugsweise konstant. In anderen Ausführungsformen variiert die Wanddicke der Trennwand. Die Perlöffnung ist derart ausgebildet, dass einströmende Druckluft perlt. Das heißt, die Trennwand erzeugt kleine Bläschen oder Tröpfchen der einströmenden Druckluft.

Der Modulfuß weist ein topfförmiges Gehäuse mit einem Boden und einer Seitenwandung auf, wobei die Trennwand beabstandet zu dem Bodenbereich in dem Gehäuse angeordnet ist. Vorzugsweise ist der Druckluftbereich kleiner als der Rohwasserbereich. Das heißt, die Trennwand sitzt außermittig. Dabei trennt die Trennwand die beiden Bereiche vorzugsweise etwa parallel zu dem Boden. Die Trennwand erstreckt sich jeweils bis zur angrenzenden Seitenwandung, sodass die Bereiche durch die Trennwand abgetrennt oder separiert sind.

Der Druckluftzulauf ist als Durchgangsöffnung durch die Seitenwandung in einem Bereich zwischen Boden und Trennwand ausgebildet. Druckluft gelangt somit über den Druckluftzulauf lediglich in den Druckluftbereich und muss zur Weiterleitung zu der Membranfiltereinheit die Trennwand, genauer deren Perlöffnungen passieren. Hierdurch wird das Perlen der Druckluft realisiert.

Außerdem sieht eine Ausführungsform vor, dass die Trennwand mehrere Perlöffnungen aufweist. Vorzugsweise sind mehrere Perlöffnungen vorgesehen. Die Perlöffnungen können beliebig verteilt sein über die Trennwand. Bevorzugt ist eine gezielte Verteilung der Perlöffnungen vorgesehen, um eine homogene Verteilung der perlenden Druckluft zu erzielen.

Zudem sieht eine Ausführungsform vor, dass die Perlöffnungen in einem ringförmigen Muster angeordnet sind, bei dem ein mittlerer Bereich der Trennwand weniger Perlöffnungen aufweist als ein in Seitenwandrichtung äußerer Bereich. Ebenfalls weist ein äußerer Ringbereich, also der Bereich benachbart zu der Seitenwandung, weniger Perlöffnungen auf. Vorzugsweise sind die Perlöffnungen ausschließlich in einer mittleren Ringanordnung vorgesehen. Der mittlere Bereich und der äußere Ringbereich sind frei von Perlöffnungen.

Auch schließt die Erfindung die technische Lehre ein, dass bei einer Vorrichtung zum Filtern von Rohfluid mittels mindestens einer Membranfiltereinheit, wobei die Vorrichtung eine Filterstufe mit mindestens einer Membranfiltereinheit aufweist, die auf einer Rohfluidseite mit einer Rohfluidzuführung fluidisch verbunden ist und die ausgebildet ist, in einem Filterbetrieb Rohfluid in Filterrichtung durch die Membranfiltereinheit zu fördern, um so auf einer Reinfluidseite Reinfluid zu erzeugen, und die auf der Reinfluidseite mit einer Spülfluidzuführung fluidisch verbunden ist und die ausgebildet ist, in einem Rückspülbetrieb Spülfluid in eine Rückspülrichtung durch die Membranfiltereinheit zu fördern, um die Membranfiltereinheit von gefilterten Schmutzpartikeln zu reinigen, wobei weiter eine Zuführung zum Zuführen von scherkrafterhöhenden Mitteln, insbesondere eine Druckluftzuführung, vorgesehen ist, die ausgebildet ist, um im Rückspülbetrieb scherkrafterhöhende Mittel einzublasen, vorgesehen ist, dass mindestens ein hier beschriebener erfindungsgemäßer Modulfuß vorgesehen ist, wobei die Zufuhr von scherkrafterhöhenden Mitteln durch den Modulfuß erfolgt. Die scherkrafterhöhenden Mittel sind vorzugsweise als Druckluft ausgebildet. Diese strömt in den Modulfuß und dringt durch die Perlöffnungen der Trennwand. Auf diese Weise wird ein Perlen der Druckluft erzeugt. Statt einer Trennwand können mehrere Trennwände vorgesehen sein. Die Trennwände können die gleiche Perlöffnungsanordnung aufweisen. In anderen Ausführungsformen weisen die Trennwände unterschiedlich angeordnete Perlöffnungen auf.

Weiter schließt die Erfindung die technische Lehre ein, dass bei einem Verfahren zum Filtern eines eine Verschmutzung enthaltenden Rohfluids mittels mindestens einer Membranfiltereinheit, wobei in einem Filterbetrieb das verschmutze Rohfluid von einer Rohfluidseite in eine Filterrichtung durch die Membranfiltereinheit zu einer Reinfluidseite gefördert wird, um so auf der Reinfluidseite ein von Verschmutzungen im Wesentlichen gereinigtes Reinfluid zu erzeugen, und in einem Rückspülbetrieb ein Spülfluid in eine Rückspülrichtung durch die Membranfiltereinheit gefördert wird, um die Membranfiltereinheit von der gefilterten Verschmutzung zu reinigen, vorgesehen ist, dass scherkrafterhöhende Mittel durch einen hier beschriebenen erfindungsgemäßen Modulfuß der Membranfiltereinheit zugeführt werden. Im Rückspülbetrieb unterstützt die Druckluft, welche das scherkrafterhöhende Mittel darstellt, den Reinigungsprozess der Membranen. Die zugeführte Druckluft wird im Rückspülbetrieb durch den Modulfuß geperlt, das heißt es bilden sich kleine Druckluftbläschen oder -tropfen. Diese gelangen in die Membrane und steigen in dieser auf. Durch das Aufsteigen bewirkt die perlende Druckluft eine Scherkraftwirkung auf anhaftende Schmutzpartikel. Diese werden sodann abgelöst und treiben mit dem Spülfluid und der Druckluft aufwärts zu dem Modulkopf. Von dort wird der Schmutz entsprechend abgeführt.

In einer Ausführungsform ist vorgesehen, dass zumindest im Rückspülbetrieb ein Spülwasser in Rückspülrichtung von außen durch die Membranfiltereinheit gespült wird und als Druckluft ausgebildete Spülluft entgegengesetzt, durch den Modulfuß perlend der Membranfiltereinheit zugeführt wird. Durch diesen Vorgang wird eine verbesserte Reinigung der Membranfiltereinheit bewirkt.

Auch ist in einer Ausführungsform vorgesehen, dass die zugeführte perlende Druckluft verteilt durch Membranöffnungen und/oder Kapillaren der Membranfiltereinheit in Richtung Modulkopf steigt und dabei in der Membranfiltereinheit anhaftenden Schmutz abschert, und danach sich mit dem Spülwasser im Modulkopf sammelt. Die als Perlator fungierende Trennwand bewirkt eine Gleichverteilung der einströmenden Druckluft. Durch die gezielte Verteilung der Druckluft wird eine verbesserte Reinigung der Membranfiltereinheiten bewirkt.

Nicht zuletzt schließt die Erfindung die technische Lehre eine, dass eine Verwendung eines erfindungsgemäße Modulfußes in einer Filtervorrichtung zum perlenden Zuführen von Druckluft vorgesehen ist. Es hat sich überraschend gezeigt, dass eine perlende Zufuhr von Druckluft verbesserte Spülergebnisse liefert. Durch die perlende Zufuhr durch den Modulfuß lässt sich das Perlen der zugeführten Druckluft einstellen. Durch Wahl geeigneter Perlöffnung und deren Anordnung sind verbessere Spülergebnisse erzielbar.

Eine Ausführungsform sieht vor, dass bei einem Verfahren zum Filtern eines eine Verschmutzung enthaltenden Rohfluids mittels mindestens einer Membranfiltereinheit, vorgesehen ist, dass in einem Filterbetrieb das verschmutze Rohfluid von einer Rohfluidseite in eine Filterrichtung durch die Membranfiltereinheit zu einer Reinfluidseite gefördert wird, um so auf der Reinfluidseite ein von Verschmutzungen im Wesentlichen gereinigtes Reinfluid zu erzeugen, und in einem Rückspülbetrieb ein Spülfluid in eine Rückspülrichtung durch die Membranfiltereinheit gefördert wird, um die Membranfiltereinheit von der gefilterten Verschmutzung zu reinigen, wobei in einer Ausführungsform im Filterbetrieb ein zusätzliches Filtermittel dem Rohfluid auf der Rohfluidseite zugefügt wird, um das Filtern zu verbessern und/oder wobei im Rückspülbetrieb zusätzlich scherkrafterhöhende Mittel, insbesondere Druckluft, in die Membranfiltereinheit eingeblasen wird, um im Rückspülbetrieb die Membranfiltereinheit von der Verschmutzung und dem zusätzlichen Filtermittel zu reinigen.

In der ersten Filterstufe wird ein Rohfluid einer Membranfiltereinheit in die Filterrichtung zugeführt. Dabei umfasst das Rohfluid neben einer ungewollten Verschmutzung in einer Ausführungsform noch ein zusätzliches Filtermittel, welches somit eine gewollte Verschmutzung darstellt. In einer anderen Ausführungsform wird auf das zusätzliche Filtermittel verzichtet. Das Rohfluid ist somit in einer Ausführungsform eine Kombination eines Reinfluids, welches das Endprodukt des Filtervorgangs darstellt, mit einer ungewollten Verschmutzung und einer gewollten Verschmutzung, insgesamt also ein Reinfluid plus Verschmutzung. In einer alternativen Ausführungsform ist die gewollte Verschmutzung nicht vorgesehen. Um das Rohfluid von der ungewollten Verschmutzung zu trennen, wird in einer Ausführungsform die gewollte Verschmutzung zugefügt. Die gewollte Verschmutzung ist somit auf die ungewollte Verschmutzung abgestimmt und unterstützt den Filtervorgang.

Das Rohfluid ist bevorzugt eine Rohflüssigkeit, genauer ein Rohwasser. Entsprechend ist das Reinfluid bevorzugt eine Reinflüssigkeit, genauer eine Reinwasser. Die - gewollte und/oder ungewollte - Verschmutzung ist ein Fluid, kann aber auch in Partikelform - lösbar oder unlösbar - in dem Rohfluid vorhanden sein. In anderen Ausführungsformen wird gänzlich auf die gewollte Verschmutzung, somit das zusätzliche Filtermittel verzichtet. Das Rohfluid wird der Membranfiltereinheit auf der Rohfluidseite zugeführt. Das zum Reinfluid gefilterte Rohfluid wird auf der Reinfluidseite der Membranfiltereinheit abgeführt. Die Verschmutzung verbleibt im Filterbetrieb in der Membranfiltereinheit. Die Verschmutzung des Reinfluids zum Rohfluid erfolgt bevorzugt zu unterschiedlichen Zeitpunkten. Ursprünglich ist das Reinfluid lediglich mit der ungewollten Verschmutzung verschmutzt. Dieses wird zeitlich versetzt mit der gewollten Verschmutzung kombiniert. Das so erzeugte Rohfluid wird über eine Fördereinheit, vorzugsweise eine Pumpe, der Membranfiltereinheit zugeführt. Dabei ist der Druck, mit dem das Rohfluid der Membranfiltereinheit zugeführt wird, beliebig wählbar. In einer Ausführungsform ist das Rohfluid verschmutztes Reinfluid ohne gewollte Verschmutzung.

Die Membranfiltereinheit filtert die Verschmutzung aus dem Rohfluid heraus. Die Reinigung erfolgt sowohl in dem Fall, in dem eine gewollte Verschmutzung beigefügt ist, wie auch in dem Fall, in dem auf die gewollte Verschmutzung verzichtet wird, gleich. Um einen reibungslosen Filtervorgang zu gewährleisten, muss die Membranfiltereinheit bei entsprechender Verschmutzung gereinigt werden. Dies erfolgt mittels Rückspülung. Dabei wird ein (Rück-)Spülfluid in eine Spülrichtung in die Membranfiltereinheit gefördert. Die Spülrichtung ist dabei entgegengesetzt zu der Filterrichtung. Das Spülfluid kann ein beliebiges Fluid sein, welches zum Reinigen der Membranfiltereinheit geeignet ist. Vorzugsweise ist das Spülfluid als Reinfluid, vorzugsweise in flüssiger Form, insbesondere als Reinwasser ausgebildet. Um den Rückspülvorgang zu verbessern, wird zusätzlich zu dem Reinfluid ein scherkrafterhöhendes Mittel der Membranfiltereinheit zugeführt. Vorzugsweise wird als scherkrafterhöhendes Mittel Druckluft verwendet. Insofern wird im Folgenden statt scherkrafterhöhende Mittel kürzer Druckluft verwendet, wobei auch andere scherkrafterhöhende Mittel, insbesondere gasförmige oder fluide scherkrafterhöhende Mittel Verwendung finden können. Das Zuführen der Druckluft erfolgt von der Rohwasserseite her, genauer über den Modulfuß. Die durch den Modulfuß geführte Druckluft bildet bei Durchlaufen durch die Trennwand Perlen, also kleine Tropfen oder Bläschen. Entsprechend sind die Perlöffnungen bemessen. Üblicherweise weisen die Perlöffnungen einen Durchmesserbereich in der Größenordnung von 0,1 mm bis wenige Millimeter auf. Somit wirkt im Rückspielvorgang die Druckluft in Filterrichtung und das Spülfluid entgegengesetzt in Spülrichtung. Für ein verbessertes Rückspülen sind der Druck des Spülfluids und der Druckluft aufeinander abgestimmt. Vorzugsweise ist das Verhältnis von Spülfluiddruck und Druckluft-Druck mindestens etwa 25:75, bevorzugt etwa 50:50. Vorzugsweise wird die Druckluft perlend zugeführt. Dies wird über den Modulfuß erreicht, durch welchen die Druckluft zugeführt wird. Durch die zusätzliche Verunreinigung des Rohfluids in einer Ausführungsform mit einer gewollten Verschmutzung, dem zusätzlichen Filtermittel, ist eine Abstimmung der Drücke erforderlich. Durch das Zuführen der Druckluft wirken auf die an und/oder in der Membranfiltereinheit befindliche Verschmutzung zusätzliche Scherkräfte ein, welche zusammen mit der Wirkung des Spülfluids ein verbessertes Lösen der Verschmutzung von der Membranfiltereinheit bewirken. Die von der Membranfiltereinheit gelöste Verschmutzung wird mit dem Spülfluid und der Druckluft über eine entsprechende Ableitung aus der Membranfiltereinheit abgeführt. Dieses Abführen des nun verunreinigten Spülfluids erfolgt auf einer Ableitungsseite. Das einst für die Reinigung unverschmutzte Spülfluid umfasst nun die gefilterte gewollte und ungewollte Verschmutzung. Bei Verwendung einer zusätzlichen, gewollten Verschmutzung wird diese auf der Seite zugesetzt, auf der die Druckluft bereits perlt. Auf diese Weise wird verhindert, dass die zusätzliche Verschmutzung die Trennwand mit den Perlöffnungen zusetzt. Aufgrund der verbesserten Ergebnisse mit dem als Perlator fungierenden Modulfuß kann aber gänzlich auf die zusätzliche Verschmutzung verzichtet werden.

Bei einer im Wesentlichen vertikalen Ausrichtung der Membranfiltereinheit bewirkt die Druckluft zudem ein entgegen der Schwerkraft gerichtetes Auftreiben der Verschmutzung, sodass diese sich leicht an einem oberen Ende der Membranfiltereinheit - genauer an einem Modulkopf -- von dieser entfernen lässt. Der Rest der Membranfiltereinheit bleibt somit von dem nicht oder kaum verschmutzten Spülfluid umspült bzw. umgeben.

Beim Rückspülvorgang wird die Zufuhr mit Rohfluid unterbrochen. Nach erfolgtem Rückspülen kann dann wieder in einen Filterbetrieb gewechselt werden. Das Filterverfahren lässt sich parallel mittels mehrerer Filtervorrichtungen durchführen. Die Filterverfahren können dabei zeitlich versetzt ausgeführt werden, sodass in einem Vorgang gefiltert wird und in dem parallelen Vorgang rückgespült wird. Die Vorgänge können derart gekoppelt sein, dass Reinfluid aus dem einen Vorgang während des Filterns abgezweigt bzw. genutzt wird, um in dem parallelen Vorgang das Rückspülen durchzuführen. Durch parallele Durchführung des Verfahrens, insbesondere zeitversetzt, lässt sich somit ein quasikontinuierlicher Filterbetrieb realisieren. Das Verfahren lässt sich somit diskontinuierlich und (quasi-)kontinuierlich durchführen.

In einer Ausführungsform der vorliegenden Erfindung, in der eine zusätzliche Verschmutzung vorgesehen ist, ist vorgesehen, dass als zusätzliches Filtermittel Aktivkohle zugefügt wird. Aktivkohle einigt sich besonders zum Filtern von chemikalischen Verschmutzungen. Die Verschmutzung haftet an der Aktivkohle an und verbleibt in der Membranfiltereinheit. Es lassen sich aber auch andere, an die ungewollte Verschmutzung angepasste Filtermittel verwenden. Vorzugsweise wird das Filtermittel in Pulverform zugeführt. Auf diese Weise ist die Wirkoberfläche des Filtermittels optimiert für ein verbessertes Filtern. Besonders bevorzugt ist somit die Zugabe von pulverförmiger Aktivkohle. Bei Verwendung einer Membranfiltereinheit kann das Filtermittel bzw. die Verschmutzung oder können die Verschmutzung und die Filtermittel in Poren der in der Membranfiltereinheit verwendet Membranfilterelemente eindringen. Trotzdem sieht eine bevorzugte Ausführungsform der vorliegenden Erfindung vor, dass eine Körner- oder Partikelgröße des pulverförmigen Filtermittels derart bemessen ist, dass diese in die Poren der Membranfilterelemente eindringen können. Durch eine kleinere Körnergröße ist eine Wirkoberfläche der zugegebenen Menge an Filtermittel optimiert. Größere Körnergrößen bewirken ein vorwiegendes Anhaften an der Außenseite der Membranfilterelemente. Die kleineren Körnergrößen bewirken ein zumindest teilweises Eindringen in die Membranporen. Durch dieses Zusetzen ist ein verbesserter Rückspülvorgang erforderlich. Bei herkömmlichen Rückspülvorgängen ist eine derartige kleine Körnergröße nicht möglich, da das Zusetzen der Membranporen nicht ausreichend durch das Rückspülen rückgängig gemacht werden kann. Erfindungsgemäß werden deshalb beim Rückspülen die scherkrafterhöhenden Mittel, bevorzugt in Form von Druckluft, zugeführt. Um eine optimale Spülwirkung zu erzielen, ist der Druck von Spülfluid und Druckluft aufeinander abgestimmt. Zudem sind die Körnergröße und die Membranporengröße aufeinander abgestimmt. Durch Einstellen und Abstimmen der vorgenannten Parameter ist ein optimaler Filter- und Rückspülvorgang realisierbar.

In einer weiteren Ausführungsform ist vorgesehen, dass im Rückspülbetrieb die Verschmutzung samt zusätzlichem Filtermittel mit dem Spülfluid und/oder dem scherkrafterhöhenden Mittel bzw. der Druckluft aus der Membranfiltereinheit in mindestens eine weitere Filterstufe gefördert und dort gefiltert werden, sodass dort wieder Reinwasser entsteht. Auf diese Weise lässt sich ein mehrstufiges Filterverfahren realisieren, in welchem die in dem ausgespülten, verschmutzten Spülmittel vorhandene Aktivkohle bzw. allgemein Filtermittel, dessen Wirkung für mehrere Filtervorgänge vorhanden ist, weiter genutzt werden kann.

Die Verschmutzung samt Spülfluid und/oder scherkrafterhöhenden Mittel wird durch geeignete Mittel aufgefangen und abgeführt. Zum Auffangen ist vorzugsweise ein entsprechendes Sammelgefäß vorgesehen. Das scherkrafterhöhende Mittel, insbesondere die Druckluft, bewirkt in dem Spülfluid ein Aufsteigen, also ein Bewegen entgegen die Schwerkraft, der Verschmutzung. Entsprechend wird die Verschmutzung an einem oberen Ende der zu spülenden Membranfiltereinheit aufgefangen. In dem oberen Bereich, beispielsweise an dem Sammelgefäß, ist eine Abführleitung angebracht, die über entsprechende Stellglieder, genauer über Ventile, sperrbar ist. Im Rückspülbetrieb werden die entsprechenden Stellglieder geöffnet und die Verschmutzung abgeführt. Das verunreinigte Spülfluid wird zu einer weiteren Filterstufe abgeführt. Die weitere Filterstufe ist analog zu der ersten Filterstufe aufgebaut. In der zweiten Filterstufe wird das verschmutzte Spülfluid analog dem Rohwasser in der ersten Filterstufe über ein Zuführleitung einer Membranfiltereinheit oder mehreren Membranfiltereinheiten zugeführt, ggf. unter Zusatz von Aktivkohle. In der zweiten Filterstufe kann die Zufuhr von Aktivkohle oder einem anderen Filtermittel reduziert sein, da sich in dem verunreinigten Spülfluid bereits das zusätzliche Filtermittel befindet. Das verunreinigte Spülfluid wird durch die Membranfiltereinheit(en) gefördert und auf der Reinfluidseite wird von Verunreinigungen befreites Reinwasser in dem Filterbetrieb erhalten. Auch die zweite Filterstufe ist von einem Filterbetrieb in einen Rückspülbetrieb umschaltbar. In dem Rückspülbetrieb wird analog zu der ersten Filterstufe ein Spülfluid entgegen der Filterrichtung, somit in Rückspülrichtung, durch die Membranfiltereinheit(en) gefördert. Als Spülfluid kann das in einer der Filterstufen erzeugte Reinwasser oder ein separat zugeführtes oder erzeugtes Spülfluid verwendet werden. Je nachdem, ob weitere Filterstufen, die analog aufgebaut sind, vorgesehen werden, schließen sich entsprechende Filtervorgänge an.

Entsprechend ist in einer Ausführungsform vorgesehen, dass das Filtern und Rückspülen in der mindestens einen weiteren Filterstufe wie in der ersten Filterstufe durchgeführt wird. Es lassen sich auf diese Weise beliebig viele Filterstufen aneinanderreihen. Dabei lässt sich das gewonnene Reinfluid und/oder Spülfluid über entsprechende Leitungen mit Spülfluid und/oder Reinwasser unterschiedlicher Filterstufen fluidisch verbinden. Ebenso lässt sich das Rohfluid und/oder das verunreinigte Spülfluid mit dem Rohfluid und/oder dem verunreinigten Spülfluid anderer Filterstufen über entsprechende Leitungssysteme fluidisch verbinden. Steuern lässt sich das Koppeln von Spül-/Rein-/Rohfluid über entsprechende Stellglieder wie Ventile, Pumpen und dergleichen.

In noch einer anderen Ausführungsform ist vorgesehen, dass die in einer weiteren Filterstufe entstandene Verschmutzung einschließlich zusätzlichem Filtermittel samt Spülfluid und scherkrafterhöhendem Mittel, insbesondere Druckluft, in einem Sedimentationsbehälter sedimentiert werden, sodass ein Sedimentschlamm entsteht. Bevorzugt findet das Sedimentieren in einer letzten Filterstufe statt, kann aber auch in Zwischenfilterstufen durchgeführt werden. Das verunreinigte Spülfluid wird in einen oder mehrere Sedimentationsbehälter gefördert. Dort wird das verunreinigte Spülfluid beruhigt bzw. ruhen gelassen, sodass die Verunreinigung sich in dem Sedimentationsbehälter absetzen kann. Die abgesetzte Verunreinigung bildet einen Sedimentschlamm. Der Sedimentschlamm wird dem Sedimentationsbehälter mit geeigneten Mitteln entnommen bzw. abgeführt. Der abgeführte Sedimentschlamm kann nun auf vielfältige Art weiter verwendet werden. Je nach Filterstufe lässt sich der Sedimentschlamm beispielsweise dem Rohwasser einer vorderen Filterstufe zuführen. Die in dem Sedimentschlamm enthaltende Aktivkohle bzw. allgemeine das dort enthaltende zusätzliche Filtermittel lässt sich so in einer vorderen Filterstufe verwenden. Dies ist insbesondere förderlich, da auch in der Sediment-Filterstufe die Aktivkohle ihre Filterwirkung nicht vollständig verloren hat und sich so diese Wirkung weiter nutzen lässt. Auf diese Weise lässt sich ein umweltfreundlicher Filterkreislauf realisieren.

Entsprechend sieht eine bevorzugte Ausführungsform vor, dass der Sedimentschlamm dem Rohfluid einer vorderen Filterstufe zugeführt wird. Das Zuführen von Sedimentschlamm, Rohfluid, Spülfluid, zusätzlichem Filtermittel und/oder scherkrafterhöhenden Mitteln erfolgt unter vorgegebenen Parametern, wie Mengenverhältnis, Druckverhältnis und/oder Temperaturverhältnissen. Bevorzugt erfolgt das Zuführen je nach Filterstufe unter vorzugegebenen Mengen und/oder Druckverhältnissen, die entsprechend aufeinander abgestimmt sind. So erfolgt in einer Ausführungsform das Zuführen der Druckluft bzw. der scherkrafterhöhenden Mittel und des Spülfluids in einem Rückspülbetrieb in einem Druckverhältnis zueinander, bei dem der Druck des scherkrafterhöhenden Mittels den Druck des Spülfluids nicht um mehr als 30%, bevorzugt nicht um mehr als 20% und am meisten bevorzugt von nicht mehr als 10% übersteigt. Auf diese Weise ist gewährleistet, dass im Rückspülbetrieb das verunreinigte Spülfluid in das Sammelgefäß aufsteigt und sich die Verschmutzung entsprechend optimiert abführen lässt.

Eine Ausführungsform sieht vor, dass bei einer Vorrichtung zum Filtern von Rohfluid mittels mindestens einer Membranfiltereinheit, vorgesehen ist, dass die Vorrichtung Mittel zur Durchführung eines vorstehend beschriebenen Verfahrens aufweist, insbesondere eine Filterstufe mit mindestens einer Membranfiltereinheit, die auf einer Rohfluidseite mit einer Rohfluidzuführung fluidisch verbunden ist und die ausgebildet ist, in einem Filterbetrieb Rohfluid in Filterrichtung durch die Membranfiltereinheit zu fördern, um so auf einer Reinfluidseite Reinfluid zu erzeugen, und die auf der Reinfluidseite mit einer Spülfluidzuführung fluidisch verbunden ist und die ausgebildet ist, in einem Rückspülbetrieb Spülfluid in eine Rückspülrichtung durch die Membranfiltereinheit zu fördern, um die Membranfiltereinheit von gefilterten Schmutzpartikeln zu reinigen, wobei weiter eine Zuführung zum Zuführen von scherkrafterhöhenden Mitteln, insbesondere eine Druckluftzuführung, vorgesehen ist, die ausgebildet ist, um im Rückspülbetrieb scherkrafterhöhende Mittel einzublasen. Zur geeigneten Steuerung der zugeführten Druckluft ist ein Modulfuß vorgesehen. Bei einer Ausführungsform mit zusätzlicher Verschmutzung ist weiter eine Mittelzuführung vorgesehen ist, die ausgebildet ist, um in dem Filterbetrieb ein zusätzliches Filtermittel dem Rohfluid zuzufügen, um das Filtern zu verbessern.

In einer Ausführungsform ist vorgesehen, dass die Membranfiltereinheit mindestens ein Membranfilterelement mit Membranporen aufweist, durch welches das Rohfluid gefördert wird und in dessen Membranporen oder an deren Membranoberflächen sich Schmutzpartikel ansammeln.

In einer weiteren Ausführungsform ist vorgesehen, dass auf der Rohfluidseite im Filterbetrieb Rohfluid und ein zusätzliches Filtermittel zugefügt sind, um diese durch die Membranfiltereinheit zu fördern, insbesondere Aktivkohle als zusätzliches Filtermittel zugefügt ist.

Noch eine weitere Ausführungsform sieht vor, dass mehrere miteinander gekoppelte Filterstufen vorgesehen sind, deren korrespondierende Reinfluidseiten und/oder Rohfluidseiten zumindest teilweise miteinander gekoppelt oder koppelbar sind.

Nicht zuletzt sieht eine weitere Ausführungsform vor, dass eine Verwendung einer pulverförmigen Aktivkohle im Rohfluid in einer Vorrichtung und/oder einem Verfahren zum Filtern von Rohfluid mittels mindestens einer Membranfiltereinheit, die mindestens ein Membranelement mit Membranporen aufweist, durch welche das Rohfluid zum Filtern gefördert wird, wobei die Membranfiltereinheiten mittels Rückspülverfahren unter Zufuhr von scherkrafterhöhenden Mitteln, insbesondere Druckluft gereinigt werden, vorgesehen ist.

Das scherkrafterhöhende Mittel ist vorzugsweise gasförmig und am meisten bevorzugt als Druckluft ausgebildet. Die Druckluft weist zumindest beim Einblasen einen Druck auf, der bevorzugt in einem Bereich von etwa größer gleich 0,2 bar bis etwa kleiner gleich 2,0 bar, beispielsweise bei etwa 0,5 bar, etwa 1,0 bar und weiter bevorzugt etwa bei 1,5bar, am meisten bevorzugt kleiner gleich 2,5 bar. Die Druckluft wird über den als Perlator dienenden Modulfuß zugeführt.

Ein zusätzliches Filtermittel, welches in einer Ausführungsform zugesetzt werden kann, ist bevorzugt als Aktivkohle und/oder als Pulver ausgebildet. Insbesondere ist das zusätzliche Filtermittel als Aktivkohle und/oder als Pulver mit einer Körnergröße ausgebildet, die derart ausgebildet ist, dass die Pulverkörner bzw. die Aktivkohle in Membranporen der Membranfiltereinheit eindringen können. Vorzugsweise ist das zusätzliche Filtermittel als pulverförmige Aktivkohle ausgebildet.

In einer Ausführungsform umfasst die Vorrichtung, die insbesondere als Filteranlage ausgebildet ist, eine Membranfiltereinheit. Bevorzugt weist die Vorrichtung wenigstens zwei Membranfiltereinheiten auf. Die Membranfiltereinheiten können in einer Filterstufe oder in unterschiedlichen Filterstufen angeordnet sein. Dabei können die Membraneinheiten gleich ausgebildet sein. In einer anderen Ausführungsform sind die Membranfiltereinheiten unterschiedlich ausgebildet. Insbesondere sind Membranfiltereinheiten in unterschiedlichen Filterstufen unterschiedlich ausgebildet. Im Filtrierbetrieb wird Rohwasser als Rohfluid durch die Membranfiltereinheiten gepumpt, während im Rückspülbetrieb zumindest eine der Membranfiltereinheiten vom Filtrierbetrieb abgekoppelt wird. In einer Ausführungsform wird eine separate Zufuhr von Spülfluid vorgesehen. Dieser abgekoppelten Membranfiltereinheit wird das von der anderen oder den anderen Membranfiltereinheiten erzeugte Reinwasser als Spülfluid in Rückspülrichtung zugeführt, so dass die Schmutzpartikel oder Verunreinigung an den Membranfilterelementen abgelöst und über eine Abwasserleitung abgeleitet werden können. Es wird in der Ausführungsform keine zusätzliche Rückspülpumpe benötigt. In anderen Ausführungsformen erfolgt das Rückspülen über eine separate Rückspülpumpe. Bei einsprechender Auslegung der Filteranlage kann mit diesem Verfahren auch ohne Unterbrechung des Filtrierbetriebs eine Rückspülung einzelner Membranfiltereinheiten nacheinander durchgeführt werden, damit in einem quasi-kontinuierlichen Verfahren. Besonders vorteilhaft ist es, beim Rückspülvorgang durch Einblasen von Druckluft auf der Rohfluidseite bzw. der Rohwasserseite die Ablösung der Schmutzpartikel an den einzelnen Membranfilterelementen zu unterstützen. Insbesondere bei einem zusätzlichen Filtermittel wie pulverförmiger Aktivkohle ist eine Unterstützung förderlich. Zur Durchführung des Verfahrens werden bevorzugt mehrere Membranfiltereinheiten verwendet, die nacheinander einzeln oder mehrere gemeinsam rückgespült werden, während sämtlich anderen Membranfiltereinheiten im normalen Filterbetrieb arbeiten. Versuche haben auch gezeigt, dass das Einblasen von Druckluft -- auch im Filtrierbetrieb -- sehr vorteilhaft ist, da dadurch ein zu schnelles Verschmutzen der Membranfilterelemente verhindert werden kann. Bevorzugt erfolgt das Einblasen des scherkrafterhöhenden Mittels, insbesondere von Druckluft, ausschließlich im Rückspülbetrieb. Durch die eingeblasene Druckluft werden Schmutzablagerungen leichter gelöst und auch von den Membranfilterelementen abgelöst und können sich in einer oberen Kammer der Membranfilterelemente sammeln, von wo sie dann beim Rückspülvorgang über die Abwasserleitung abgeführt werden können. Die Filteranlage gemäß einer Ausführungsform weist wenigstens zwei Membranfiltereinheiten auf, die einen Filtrierbetrieb und einen Rückspülbetrieb mit nur einer einzigen Pumpe, in anderen Ausführungsformen mit mehreren Pumpen, ermöglicht. Zum Rückspülen einer oder mehrerer Membranfiltereinheiten wird das von einer oder mehreren anderen Membranfiltereinheiten erzeugte Reinwasser als Spülfluid, genauer als Spülwasser, verwendet, in dem dieses Spülwasser in Rückspülrichtung in die rückzuspülende Membranfiltereinheit eingeleitet wird. Zu diesem Zweck sind entsprechende Absperrventile vorgesehen. Die zu den Membranfiltereinheiten von der Pumpe oder den Pumpen führenden Zufuhrleitungen besitzen separate Absperrventile und auch die von den Membranfiltereinheiten zur Abwasserleitung führenden Ablaufleitungen haben jeweils separate Absperrventile. In Verbindung mit einem zusätzlichen Absperrventil in der ausgangsseitigen Reinfluid- oder Reinwasserleitung wird ermöglicht, dass das in der Filteranlage erzeugte Reinwasser zum Rückspülen einzelner Membranfiltereinheiten genutzt werden kann. Mittels eines Luftkompressors kann über separat abstellbare Druckluftleitungen im Bereich der Rohwasserzufuhr bzw. der Rohwasserseite Druckluft in die Membranfiltereinheiten eingeblasen werden, wodurch sich zumindest im Rückspülbetrieb in sehr vorteilhafter Weise eine Ablösung von Schmutzpartikeln an den Membranfilterelementen ergibt. Die Membranfilterelemente der Membranfiltereinheiten können röhrenförmige oder anders geformte Elemente sein, die von innen nach außen oder umgekehrt beim Filtriervorgang durchströmt werden können. Dabei können die Membranfilterelemente beispielsweise in zylindrischen, vertikal ausgerichteten Druckbehältern eingesetzt sein, die die Membranfiltereinheiten der Filteranlage bilden. An einer oberen Kammer können Ablaufleitungen über Absperrventile mit einer gemeinsamen Abwasserleitung zum Abführen des rückgespülten Spülwassers angeschlossen sein. Diese obere Kammer mit den Membranfiltereinheiten kann über ein automatisches Entlüftungsventil entlüftet werden.

In einer Ausführungsform ist vorgesehen, dass der Filtervorgang nach dem sogenannten IN/OUT-Prinzip erfolgt. Dabei wird von innen nach außen filtriert. Entsprechend wird dem Rohwasser oder Rohfluid Pulveraktivkohle vor einer Rohwasserpumpe, Zuführpumpe oder Feedpumpe hinzudosiert. Zeitlich danach trifft das gemischte Medium, also Rohwasser plus Aktivkohle, auf die Membrane der Membranfiltereinheit, also die Filtereinheit der ersten Filterstufe. Im Filtrationsprozess wird bevorzugt keine Druckluft oder ein anderes scherkrafterhöhendes Mittel hinzugegeben. Im Rückspülbetrieb, d.h. bei der Rückspülung wird das zuvor aufbereitete Wasser (Filtrat, Reinwasser oder allgemein Reinfluid) zur Rückspülung als Spülfluid oder Spülwasser verwendet. Die Verwendung des erzeugten Reinwassers weist den Vorteil auf, dass was Reinwasser einmal in die Filterrichtung durch die Membranfiltereinheit durchging, geht dieses problemlos in umgekehrte Richtung, d.h. in Rückspülrichtung, auch wieder durch die Membranfiltereinheit zurück. Um die Rückspülung zu intensivieren, wird in einen unteren Bereich der Membranfiltereinheit, genauer unten in die Membrane im Modulfuß Luft, genauer Druckluft, als scherkrafterhöhendes Mittel eingeblasen und von außen nach innen (OUT/IN) wird das Spül- oder Reinwasser (Filtrat) in die Membraneinheit hineingedrückt. Die Druckluft erzeugt dabei eine Scherwirkung im Bereich der an der Membranelementen Verschmutzung und löst die Verschmutzung dadurch leichter von der Membranfiltereinheit. Der durch die Luft und das Rückspülwasser abgetragene Schmutz steigt zusammen nach oben, somit entgegen der Schwerkraft, in einen Modulkopf. Von dort wird das verunreinigte Spülfluid abgeführt, vorzugsweise seitlich abgeleitet. Luft wird bevorzugt nur bei der Rückspülung verwendet und wird unten in die Membrane, genauer in deren Modulfuß, eingeblasen.

Entsprechend ist die Vorrichtung zum Filtern für eine Filtration nach dem IN/OUT-Verfahren, also von innen nach außen, und für eine Rückspülung nach dem OUT/IN-Verfahren, also von außen nach innen, ausgelegt. Bei der Filtration wird das Rohrfluid von innen nach außen filtriert. Hierzu weist die Vorrichtung einen Modulfuß auf. Dieser ist u.a. zur Einleitung von Spülluft und/oder von Rohwasser ausgebildet. In fluidischer Verbindung mit dem Modulfuß ist ein Modulgehäuse vorgesehen. Dieses ist etwa als Hohlzylinder ausgebildet. In dessen Innenraum ist die Membranfiltereinheit mit den Membranfilterelementen angeordnet. Dabei sind die Membranfilterelmente derart angeordnet, dass Rohwasser oder Rohfluid von dem Modulfuß in die Membranfilterelemente eingeleitet wird. Die Membranfilterelemente sind etwa rohrförmig ausgebildet. Das Rohfluid wird bei der Filtration von dem Modulfuß ausschließlich in die Membranfilterelemente eingeleitet. Von da drängt das Rohfluid durch die Poren nach außen. Die Verunreinigung bleibt an der Innenseite der Membranfilterelemente und/oder an der Innenseite der Poren haften. Das gereinigte Rohfluid drängt durch die Poren nach außen. Bei Zugabe von einem Filtermittel wie Aktivkohle wird diese ebenfalls durch den Modulfuß in die Filterelemente mit dem Rohfluid bewegt. Bei dem Durchtritt durch die Poren bleibt das Filtermittel an der Innenseite der Membranfilterelemente und/oder an der Innenseite der Poren haften, ebenso wie die Verschmutzung. Der Modulfuß weist einen Rohwasserzulauf und einen Spülluftzulauf auf. Beide münden in eine gemeinsame Kammer des Modulfußes. Von dieser Kammer gelangt beispielsweise das Rohfluid über eine perforierte Trennwand zu den Filterelementen. Die Trennwand ist beispielsweise derart perforiert, dass der durch die Perforation realisierte Durchlass in die Filterelemente, genauer den Hohlraum der Filterelemente führt. Da die Kammer sowohl für das Rohfluid als auch für Spülluft geeignet ist, gilt gleiches für die Spülluft. Die Trennwand verbindet fluidisch die Kammer mit dem Innenraum der Filterelemente bzw. Membranfilterelemente. Nach Durchdritt durch die Poren der Membranfilterelemente gelangt das gereinigte Rohfluid in den Innenraum des hohlzylindrischen Modul-Gehäuses, in dem auch die Membranfiltereinheit angeordnet ist. Über einen Reinwasserabfluss gelangt das gereinigte Fluid aus dem Innenraum hinaus. Das Spülabwasser wird aus den Membranfilterelementen über entsprechende Spülabwasserleitungen abgeführt. Hierzu sind die Membranfiltereinheiten fluidisch mit einem Modulkopf verbunden. Dieser weist Durchlässe zu dem Hohlraum der Membranfilterelemente auf, sodass das Spülabwasser durch die Durchlässe von dem Hohlraum zu der Spülabwasserleitung gelangt. Die Membranfilterelemente sind vorzugsweise als Kapillare ausgebildet. Aufgrund der Kapillarwirkung drängt das Rohfluid durch die Poren. Genauer sind die Kapillare als mit Kunstharz vergossene Kapillare ausgebildet. Dabei sind die Kapillaren an Ihren Enden mit Kunstharz vergossen. In diesem Bereich gelangt Rohfluid nicht durch die Poren nach außen. Aufgrund der hohlzylindrischen Form der Filterelemente steht an der Innenseite nur wenig Oberfläche zur Ablagerung der Verunreinigung des Rohfluids zur Verfügung. Somit verstopfen bei einem IN/OUT - Filtrierverfahren die Poren schneller, als beispielsweise bei einem OUT/IN-Filtrierverfahren. Insofern wird allenfalls bei herkömmlichen Lösung ein OUT/IN-Verfahren mit zusätzlichem Filtermittel betrieben, da hier eine größere Membranoberfläche bereitgestellt ist, an welcher sich die Verschmutzung und das Filtermittel absetzten können. Erfindungsgemäß wird das Verfahren aber im IN/OUT-Filtrierverfahren betrieben bzw. ist die Vorrichtung für ein IN/OUT-Verfahren ausgelegt. Bei dem Rückspülvorgang wird das Prinzip entsprechend umgekehrt. Dieses erfolgt erfindungsgemäß nach dem OUT/IN-Verfahren. Hier wird Spülfluid von außen über die Poren nach innen in die hohlen Membranfilterelemente gespült. Dieses Spülfluid wird über den Modulkopf in den Innenraum des Modulgehäuses geführt. Von dort gelangt es durch die Poren in den Hohlraum der Membranfilterelemente. Zusätzlich wird über den Modulfuß (von unten) Spülluft zugeführt. Die Spülluft gelangt von der Kammer des Modulfußes durch die Perforation der Trennwand in den Hohlraum der Membranfilterelemente. Das Spülwasser, welches die anhaftende Verschmutzung einschließlich Filtermittel (Aktivkohle) aufnimmt, wird über den Modulkopf abgeführt. Der Modulkopf ist ähnlich wie der Modulfuß ausgebildet, mit dem Unterschied, dass der Modulkopf eine von dem Spülwasserabfluss getrennte fluidische Verbindung mit dem Innenraum des Modulgehäuses aufweist. Der Modulfuß weist nur Durchlässe in den Hohlraum der Filterelemente auf. Der Modulkopf weist sowohl einen Durchlass zu dem Innenraum des Modulgehäuses auf als auch einen davon getrennten oder trennbaren Spülwasserabfluss. Der Spülwasserabfluss umfasst in dem Modulkopf eine Kammer, die über eine Trennwand fluidische Verbindung mit dem jeweiligen Hohlraum der Membranfilterelemente aufweist. Auf diese Weise gelangen das Spülabwasser und/oder die Spülluft über den Hohlraum zu dem Spülwasserabwasserabfluss. Getrennt davon gelangt das Reinwasser über die fluidische Verbindung von Innenraum und Reinwasserabfluss aus dem Innenraum hinaus. Der Reinwasserabfluss dient zugleich als Spülwasserzufluss. Die Flussrichtung von den Membranfilterelementen zu dem Spülwasserabfluss ist somit beim Filtrieren und Rückspülen gleich, während die Flussrichtung in dem Reinwasserablauf beim Filtrieren umgekehrt ist als beim Spülwasserzufluss. Die Flussrichtung im Modulfuß ist beim Filtern und beim Spülen stets die gleiche und führt in die Membranfiltereinheiten, genauer deren Hohlraum. Die Flussrichtung in den Poren ist beim Filtern und beim Spülen wiederum umkehrend bzw. unterschiedlich. Das Verfahren kann mittels scherkrafterhöhender Mitteln oder auch ohne durchgeführt werden.

Insbesondere sieht eine Ausführungsform vor, dass bei einem Modulfuß mit einem Boden und einer Seitenwandung für eine Vorrichtung zum Filtern von Rohfluid mittels mindestens einer Membranfiltereinheit, der mindestens einen Druckluftbereich mit mindestens einem Druckluftzulauf und mindestens einem Rohwasserbereich mit mindestens einem Rohwasserzulauf aufweist, wobei der Rohwasserbereich und der Druckluftbereich mittels einer Trennwand voneinander getrennt sind, wobei sich die Trennwand jeweils bis zur angrenzenden Seitenwandung erstreckt und wobei die Trennwand zumindest abschnittsweise mit mindestens einer Perlöffnung als Perlator ausgebildet ist, sodass zugeführte Druckluft von dem Druckluftbereich durch die Trennwand in den Rohwasserbereich perlt.

Zur Verbesserung des Filtervorgangs ist in einer Ausführungsform neben der vorstehend beschriebenen ersten Filterstufe mindestens eine weitere Filterstufe vorgesehen. Die weitere Filterstufe ist mit der vorherigen Filterstufe gekoppelt. In der weiteren Filterstufe wird das verunreinigte Rückspülwasser der vorherigen Filterstufe, d.h. das Gemisch aus allem, das in der vorherigen Filterstufe herausgefiltert wurde einschließlich der Pulveraktivkohle, nach einer vorbestimmten Zeit wieder aufbereitet. Das Filtrat (Reinwasser, Reinfluid oder auch Trinkwasser) aus der weiteren Filterstufe wird dem Rohwasser oder Rohfluid der vorherigen Filterstufe wieder hinzugegeben. Das verunreinigte Spülwasser wird analog zur ersten oder vorherigen Filterstufe abgeführt. Eine Filterstufe kann als Sedimentationsfilterstufe ausgebildet sein, vorzugsweise die letzte Filterstufe. Hier wird das verunreinigte Spülwasser einem Sedimentationsbehälter hinzugefügt. Der im Sedimentationsbehälter entstehende Schlamm, d.h. das Gemisch aus den vorherigen Spülprozessen, kann nun dem Rohwasser einer vorherigen Filterstufe, vorzugsweise der ersten Filterstufe hinzudosiert werden, so dass die Absorptionskraft der Pulveraktivkohle weiter ausgeschöpft werden kann. Auf diese Weise wird ein in sich schlüssiger Kreislauf geschaffen.

Die Filtration läuft im Grunde wie folgt ab. Die Absperrorgane für Rohwasser und Reinwasser sind geöffnet. Die Absperrorgane für Schlammwasser / Abwasser und Rückspülwasser sind geschlossen. Die Rohwasserpumpe startet und drückt bzw. fördert Rohwasser von innen nach außen durch die Membranfiltereinheit und/oder die Membrane. Das gewonnene Reinwasser fließt über eine Reinwasserleitung zum Reinwasserbehälter.

Die Rückspülung läuft wie folgt ab. Die Absperrorgane Rohwasser und Reinwasser sind geschlossen. Die Absperrorgane Schlammwasser und Rückspülwasser sind geöffnet. Das Spülwasser startet und drück / fördert das Spülwasser von außen nach innen durch die Membranfiltereinheit bzw. die Membranen. Zumindest teilweise parallel dazu startet der Drucklufterzeuger und bläst Spülluft in den Modulfuß. Die Spülluft verteilt sich in dem Modulfuß und perlt gleichmäßig verteilt zu der Membraneinheit bzw. den Membranen und deren Kapillaren. Durch diese steigt die Spülluft nach oben und schert dabei den an den Membranen anhaftenden Schmutz ab. Schließlich sammelt sich die Spülluft samt Spülwasser und Schmutz im Modulkopf, wo es das Schlammwasser bildet. Das Schlammwasser wird dann durch die Schlammwasserleitung abgeleitet.

Während das Filtern einmal mit zusätzlichem Filtermittel wie Aktivkohle durchgeführt wird und einmal ohne das zusätzliche Filtermittel, erfolgt das Rückspülen, also das Reinigen der Membranfiltereinheiten stets gleich. Druckluft wird über den Modulfuß zugeführt. Die Druckluft durchdringt die poröse Trennwand, wodurch ein Perleffekt erzielt wird. Die Druckluftperlen gelangen zu der Membranfiltereinheit und steigen dort perlend auf. Durch das perlende Aufsteigen wird an den Membranen anhaftender Schmutz leichter gelöst. Der Schmutz, die Druckluft und das Spülfluid sammeln sich in dem Modulkopf. Von dort wird das verschmutzte Wasser oder Fluid abgeführt.

Weitere, die Erfindung verbessernde Maßnahmen sind in den Unteransprüchen angegeben oder ergeben sich aus der nachfolgenden Beschreibung von mindestens einem Ausführungsbeispiel der Erfindung, welches in der Figur schematisch dargestellt ist. Sämtliche aus den Ansprüchen, der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet.

Es zeigen:
- Fig. 1: schematisch drei Ansichten einer Ausführungsform eines Modulfußes,
- Fig. 2: schematisch eine Schaltplan einer Ausführungsform einer Filtervorrichtung und
- Fig. 3: schematisch eine weitere Ausführungsform einer Filtervorrichtung.

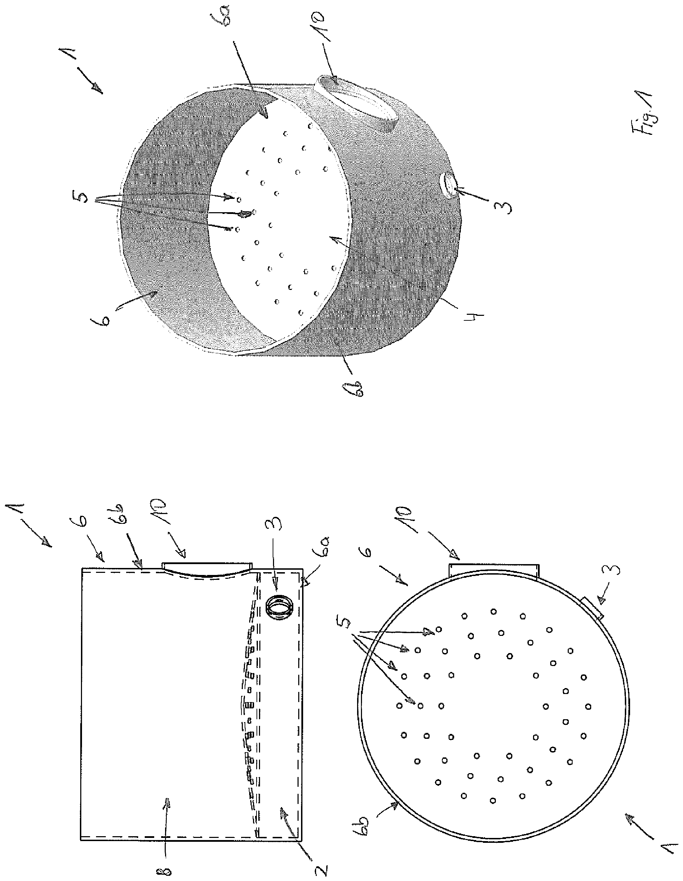

Die Fig. 1 bis 3 zeigen schematisch in verschiedenen Ansichten und Detailierungsgraden eine Vorrichtung 100 zum Filtern von Rohwasser.

Fig. 1 zeigt schematisch drei Ansichten einer Ausführungsform eines Modulfußes 1. Der Modulfuß 1 weist einen Druckluftbereich 2 mit einem Druckluftzulauf 3 auf. Weiter weist der Modulfuß 1 einen Rohwasserbereich 8 mit einem Rohwasserzulauf 10 auf. Der Rohwasserbereich 8 und der Druckluftbereich 2 sind mittels einer Trennwand 4 voneinander getrennt. Die Trennwand 4 weist als Durchgangsöffnungen ausgebildete Perlöffnungen 5 auf, welche den Rohwasserbereich 8 mit dem Druckluftbereich 2 fluidisch verbinden. Der Modulfuß 1 weist ein Gehäuse 6 auf. Das Gehäuse 6 ist etwa topfförmig ausgebildet. Entsprechend weist das Gehäuse 6 einen Boden 6a und eine Seitenwandung 6b auf. Beabstandet zu dem Boden 6a ist die Trennwand 4 angeordnet. Wie der Boden 6a erstreckt sich auch die Trennwand 4 erfindungsgemäß über den gesamtem Querschnitt des von der Seitenwandung 6b umgebenden Inneren des Gehäuses 6. Die Trennwand 4 ist gewölbt ausgebildet. Ein mittlerer Teil der Trennwand 4 ist in Normalenrichtung zu dem Boden 6a weiter entfernt von dem Boden als ein äußerer Teil. Der Druckluftzulauf 3 ist als Durchgangsöffnung durch die Seitenwandung 6b in einem Bereich zwischen Boden 6a und Trennwand 4 ausgebildet. Der Rohwasserzulauf 10 ist als Durchgangsöffnung durch die Seitenwandung in einem Bereich oberhalb des Bodens 6a und oberhalb der Trennwand 4 ausgebildet. Damit zugeführte Druckluft in den Rohwasserbereich 8 perlt, weist die Trennwand 4 mehrere als Durchgangsöffnung ausgebildete Perlöffnungen 5 auf. Die Perlöffnungen 5 sind in einem ringförmigen Muster um den mittleren Teil angeordnet. In einem äußeren Ringbereich sind ebenso wie in dem mittleren Bereich keine Perlöffnungen 5 vorgesehen. Vorzugsweise sind die Perlöffnungen in drei konzentrischen Ringlinien, in Umfangsrichtung zueinander beabstandet. um den mittleren Teil angeordnet. Vorzugsweise sind die Perlöffnungen 5 gleich groß ausgebildet.

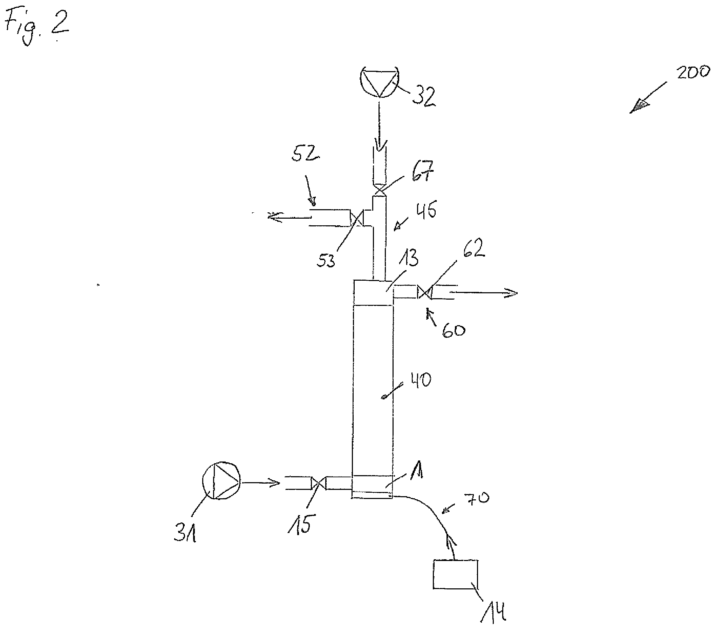

Fig. 2 zeigt schematisch einen Schaltplan einer Ausführungsform einer Filtervorrichtung 200. Die Filtervorrichtung 200 umfasst eine Membranfiltereinheit 40. Die Membranfiltereinheit 40 ist an ihrem unteren Ende fluidisch mit dem Modulfuß 1 verbunden. An ihrem oberen Ende ist die Membranfiltereinheit 40 mit einem Modulkopf 13 fluidisch verbunden. Der Modulfuß 1 ist fluidisch über dessen Druckluftbereich 2 und mit der Druckluftzugfuhr 3 mit einem Drucklufterzeuger 14 verbunden. Weiter ist der Modulfuß 1 mit dessen Rohwasserbereich 8 über den Rohwasserzulauf 10 fluidisch mit einer Rohwasserpumpe 31 verbunden. Zum Regulieren eines Rohwasserzuflusses ist zwischen Rohwasserpumpe 31 und Rohwasserzulauf 10 ein Absperrorgan 15 vorgesehen. Der Modulkopf 13 weist eine Abfuhr 60 für das Abwasser bzw. verunreinigte Spülfluid auf. Ein Abwasserabfluss ist über ein Absperrorgan 62, welches fluidisch mit dem Modulkopf 13 verbunden ist, regelbar. Weiter ist der Modulkopf 13 mit einer Zufuhr 65 für das Spülfluid verbunden. Spülwasser gelangt über eine Pumpe 32 für das Spülfluid / Spülwasser / Rückspülwasser zu dem Modulkopf 13. Zwischengeschaltet ist eine Absperrorgan 67 für das Rückspülfluid, um den Rückspülfluidfluss zu dem Modulkopf 13 zu regeln. Von der Zufuhr 65 zweigt eine Reinwasserabfuhr 52 ab. Die Reinwasserabfuhr 52 weist ebenfalls ein Absperrorgan 53 für die Regelung des Reinwasserflusses auf.

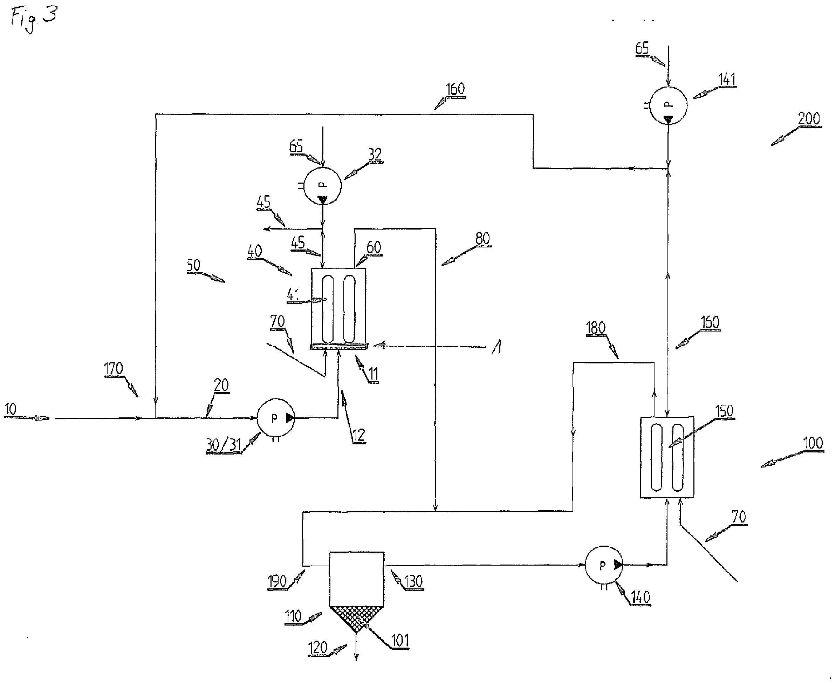

Fig. 3 schematisch eine weitere Ausführungsform einer Filtervorrichtung 200. Bei 10 ist eine Zufuhr von Rohwasser über den Rohwasserzufluss oder die Rohwasserzufuhr vorgesehen. Das Rohwasser wird über den Modulfuß 1 der Vorrichtung 200 zugeführt. Bei 20 erfolgt über eine geeignete Zuführeinrichtung die Zufuhr von zusätzlichen Filtermitteln. Die zusätzlichen Filtermittel sind vorliegend als Pulveraktivkohle ausgebildet. Die Pulveraktivkohle wird dem Rohwasser zugeführt. Um das Rohwasser samt Pulveraktivkohle zu einer Membranfiltereinheit 40 zu fördern, ist eine Fördervorrichtung 30 in Form einer Pumpe 31 vorgesehen. Die Membranfiltereinheit 40 weist mehrere Membranfilterelemente 41 auf, durch bzw. in welche das Rohwasser von einer Rohwasserseite 11 in Filterrichtung 12 auf eine Reinwasserseite 45 gefördert wird. Die Membranfiltereinheit 40 bildet mit den entsprechenden Anschlüssen und Zu- und Abführeinrichtungen eine erste Filterstufe 50 aus. Über die Abfuhr 60 wird das gewonnene Reinwasser auf der Reinwasserseite 45 von der Membranfiltereinheit 40 zur weiteren Verwendung abgeführt. Zur Reinigung der Membranfiltereinheit 40 wird von dem zuvor beschriebenen Filterbetrieb auf einen Rückspülbetrieb umgeschaltet. In dem Rückspülbetrieb wird das gewonnene Reinwasser bei 65 in (Rück-)Spülrichtung, das heißt entgegen der Filterrichtung 12 in die Membranfiltereinheit 40 über eine Fördereinrichtung, die in der Figur als Pumpe 32 ausgebildet ist, gefördert. Durch diesen (Rück-)Spülvorgang werden an und/oder in den Membranfilterelementen 41 anhaftende Verschmutzungen - gewollte oder ungewollte - wie die Pulveraktivkohle und/oder Schmutzpartikel abgelöst. Unterstützt wird dieser Spülvorgang durch Zufuhr von scherkrafterhöhenden Mitteln, die hier schematisch bei 70 eingezeichnet sind, und die als Druckluft über die Pumpe 31 der Membranfiltereinheit 40 zugeführt werden. Unterstützt durch die Druckluft erfolgt ein verbessertes Reinigen der Membranfilterelemente 41. Hierbei wird das Spülfluid mit der an den Membranfilterelementen 41 anhaftenden Verschmutzung verunreinigt. Durch die eingeblasene Druckluft wird das verunreinigte Spülfluid entgegen der Schwerkraft aufgeschwemmt. An einer bei 80 dargestellten Spülfluidabführung wird das verunreinigte Spülfluid, welches vorliegend als schlammhaltiges Wasser ausgebildet ist, zu einer zweiten Filterstufe 100 geführt. In der zweiten Filterstufe 100 wird das verunreinigte Fluid zunächst in einen Sedimentationsbehälter 110 geleitet. Dort wird der Schlamm 101 zumindest teilweise von dem Wasser mittels Sedimentation getrennt. Der Schlamm 101, welches sich in dem Sedimentationsbehälter 110 absetzt, wird zur weiteren Verwendung bei 120 abgeführt. Das Wasser wird bei 130 ebenfalls abgeführt. Hierzu ist eine Pumpe 140 vorgesehen. Die Pumpe 140 fördert das Wasser aus dem Sedimentationsbehälter 110 in eine weitere Membranfiltereinheit 150. Hier erfolgt der Filtrationsvorgang analog zu der ersten Filterstufe 50. Das in der zweiten Filterstufe 100 gewonnene Reinwasser oder Filtrat wird bei 160 aus der Membranfiltereinheit 150 im Filterbetrieb in Filterrichtung abgeführt. Um einen wirkungsvollen Kreislauf zu schaffen, wird das in der zweiten Filterstufte 100 gewonnene Reinwasser dem Rohwasser zur ersten Filterstufe 50 bei 170 zugeführt. Ein Kreislauf ist somit geschlossen. Im Filterbetrieb wird das in der zweiten Filterstufe 100 nach dem gleichen Prinzip wie in der ersten Filterstufe 50 gewonnene verunreinigte Spülfluid bei 180 abgeführt und bei 190 dem aus der ersten Filterstufe 50 entnommenen verunreinigten Spülfluid zur weiteren Zufuhr zur zweiten Filterstufe 100 zugeführt. Auf diese Weise ist ein zweiter Kreislauf geschlossen. In die Leitung bei 160, das heißt bei der Abfuhr des in der zweiten Filterstufe 100 gewonnenen Reinfluids zu dem Rohwasser der ersten Filterstufe 50 wird gemäß der vorliegenden Figur Spülfluid oder Spülwasser bei 65 (Zufuhr) über eine weitere Fördereinrichtung, die hier als Pumpe 141 ausgebildet ist, hinzugefügt. Auf diese Weise kann die zweite Filterstufe ebenfalls im Filter- und Rückspülbetrieb betrieben werden.

### Bezugszeichenliste

- 1: Modulfuß
- 2: Druckluftbereich
- 3: Druckluftzulauf
- 4: Trennwand
- 5: Perlöffnung
- 6: Gehäuse
- 6a: Boden
- 6b: Seitenwandung
- 8: Rohwasserbereich
- 10: Zufuhr (Rohwasser, erste Filterstufe)
- 11: Rohwasserseite, Rohfluidseite
- 12: Filterrichtung
- 13: Modulkopf
- 14: Drucklufterzeuger
- 15: Absperrorgan (Rohwasser)
- 20: Zuführeinrichtung (Pulveraktivkohle, erste Filterstufe)
- 30: Fördervorrichtung
- 31: Pumpe (1, Rohwasser/-fluid)
- 32: Pumpe (2, Spülwasser/-fluid
- 40: Membranfiltereinheit
- 41: Membranfilterelemente
- 45: Reinwasserseite
- 50: Filterstufe (erste)
- 52: Reinwasserabfuhr
- 53: Absperrorgan (Reinwasser)
- 60: Abfuhr (Spülfluid)
- 62: Absperrorgan (Abwasser)
- 65: Zufuhr (Spülfluid)
- 67: Absperrorgan
- 70: Zufuhr (scherkrafterhöhende Mittel, Druckluft)
- 80: Spülfluidabführung
- 100: Filterstufe (zweite)
- 101: Schlamm
- 110: Sedimentationsbehälter
- 120: Abfuhr (Schlamm, Sedimentationsbehälter)
- 130: Abfuhr (Wasser, Sedimentationsbehälter)
- 140: Pumpe (2, zweite Filterstufe, Rohwasser/-fluid)
- 141: Pumpe (2, zweite Filterstufe, Spülwasser/-fluid)
- 150: Membranfiltereinheit (zweite Filterstufe)
- 160: Abfuhr (zweite Filterstufe, Filtrat)
- 170: Zufuhr (zweite Filterstufe zur ersten Filterstufe)
- 180: Abfuhr (zweite Filterstufe, verunreinigtes Spülfluid)
- 190: Zufuhr (zweite Filterstufe, verunreinigte Spülfluid)
- 200: Vorrichtung

## Patentansprüche

1. Modulfuß (1), mit einem Boden (6a) und einer Seitenwandung (6b), für eine Vorrichtung (200) zum Filtern von Rohfluid mittels mindestens einer Membranfiltereinheit (40), mit mindestens einem Druckluftbereich (2) mit mindestens einem Druckluftzulauf (3) und mindestens einem Rohwasserbereich (8) mit mindestens einem Rohwasserzulauf (10), wobei
der Rohwasserbereich (8) und der Druckluftbereich (2) mittels einer Trennwand (4) voneinander getrennt sind, wobei die sich jeweils bis zur angrenzenden Seitenwandung (6b) erstreckende Trennwand (4) zumindest abschnittsweise mit mindestens einer Perlöffnungen (5) als Perlator ausgebildet ist, sodass zugeführte Druckluft von dem Druckluftbereich (2) durch die Trennwand (4) in den Rohwasserbereich (8) perlt **dadurch gekennzeichnet, dass**
der Modulfuß (1) ein topfförmiges Gehäuse (6) mit dem Boden (6a) und der Seitenwandung (6b) aufweist, wobei die Trennwand (4) beabstandet zu dem Boden (6a) in dem Gehäuse (6) angeordnet ist, wobei der Boden (6a) wie auch die Trennwand (4) sich über den gesamten Querschnitt des von der Seitenwandung (6b) umgebenden Inneren des Gehäuses (6) erstreckt, wobei
der Druckluftzulauf (3) als Durchgangsöffnung durch die Seitenwandung (6b) in einem Bereich zwischen Boden (6a) und Trennwand (4) ausgebildet ist und wobei die Druckluft somit über den Druckluftzulauf (3) lediglich in den Druckluftbereich (2) gelangt und zur Weiterleitung zu der Membranfiltereinheit die Trennwand (4), genauer deren Perlöffnungen (5) passieren muss.

2. Modulfuß (1) nach Anspruch 1, **dadurch gekennzeichnet, dass** die Trennwand (4) mehrere Perlöffnungen (5) aufweist.

3. Modulfuß (1) nach einem der vorherigen Ansprüche 1 oder 2, **dadurch gekennzeichnet, dass**
die Perlöffnungen (5) in einem ringförmigen Muster angeordnet sind, bei dem ein mittlerer Bereich der Trennwand (4) weniger Perlöffnungen (5) aufweist als ein in Seitenwandrichtung (6b) äußerer Bereich.

4. Vorrichtung (200) zum Filtern von Rohfluid mittels mindestens einer Membranfiltereinheit (40), wobei die Vorrichtung eine Filterstufe (50) mit mindestens einer Membranfiltereinheit (40) aufweist, die auf einer Rohfluidseite (11) mit einer Rohfluidzuführung fluidisch verbunden ist und die ausgebildet ist, in einem Filterbetrieb Rohfluid in Filterrichtung (12) durch die Membranfiltereinheit (40) zu fördern, um so auf einer Reinfluidseite Reinfluid zu erzeugen, und die auf der Reinfluidseite mit einer Spülfluidzuführung fluidisch verbunden ist und die ausgebildet ist, in einem Rückspülbetrieb Spülfluid in eine Rückspülrichtung durch die Membranfiltereinheit (40) zu fördern, um die Membranfiltereinheit (40) von gefilterten Schmutzpartikeln zu reinigen, wobei weiter eine Zuführung (70) zum Zuführen von scherkrafterhöhenden Mitteln, insbesondere eine Druckluftzuführung, vorgesehen ist, die ausgebildet ist, um im Rückspülbetrieb scherkrafterhöhende Mittel einzublasen, **dadurch gekennzeichnet, dass** mindestens ein Modulfuß (1) nach einem der vorherigen Ansprüche vorgesehen ist, wobei die Zufuhr von scherkrafterhöhenden Mitteln durch den Modulfuß (1) erfolgt.

5. Verfahren zum Filtern eines eine Verschmutzung enthaltenden Rohfluids mittels mindestens einer Membranfiltereinheit (40), wobei
in einem Filterbetrieb das verschmutze Rohfluid von einer Rohfluidseite (11) in eine Filterrichtung (12) durch die Membranfiltereinheit (40) zu einer Reinfluidseite gefördert wird, um so auf der Reinfluidseite ein von Verschmutzungen im Wesentlichen gereinigtes Reinfluid zu erzeugen, und
in einem Rückspülbetrieb ein Spülfluid in eine Rückspülrichtung durch die Membranfiltereinheit (40) gefördert wird, um die Membranfiltereinheit (40) von der gefilterten Verschmutzung zu reinigen, **dadurch gekennzeichnet, dass**
scherkrafterhöhende Mittel durch einen Modulfuß (1) nach einem der vorherigen Ansprüche 1 bis 3 der Membranfiltereinheit (40) zugeführt werden.

6. Verfahren nach Anspruch 5, **dadurch gekennzeichnet, dass**
zumindest im Rückspülbetrieb ein Spülwasser in Rückspülrichtung von außen durch die Membranfiltereinheit (40) gespült wird und als Druckluft ausgebildete Spülluft entgegengesetzt, durch den Modulfuß (1) perlend der Membranfiltereinheit (40) zugeführt wird.

7. Verfahren nach Anspruch 5 oder 6, **dadurch gekennzeichnet, dass**
die zugeführte perlende Druckluft verteilt durch Membranöffnungen und/oder Kapillaren der Membranfiltereinheit (40) in Richtung Modulkopf (13) steigt und dabei in der Membranfiltereinheit (40) anhaftenden Schmutz abschert, und danach sich mit dem Spülwasser im Modulkopf (13) sammelt.

8. Verwendung eines Modulfußes (1) in einer Filtervorrichtung (200) zum perlenden Zuführen von Druckluft, wobei der Modulfuß (1) nach einem der Ansprüche 1 bis 3 ausgebildet ist.

## Claims

1. A module flow (1), having a base (6a) and a lateral wall (6b), for a device (200) for filtering crude fluid by means of at least one membrane filter unit (40), having
at least one compressed air region (2)
with at least one compressed air inlet (3) and
at least one crude water region (8)
with at least one crude water inlet (10), wherein the crude water region (8) and the compressed air region (2) are separated from each other by means of a partition wall (4), wherein the partition wall (4) extending respectively to the adjoining lateral wall (6b) is formed at least in sections as an aerator with at least one bubble openings (5), so that compressed air supplied from the compressed air region (2) bubbles through the partition wall (4) into the crude water region (8), **characterized in that** the module flow (1) comprises a pot-shaped housing (6) with the base (6a) and the lateral wall (6b), wherein the partition wall (4) is arranged spaced apart from the base (6a) in the housing (6), wherein the base (6a) and the partition wall (4) extend over the entire cross-section of the interior of the housing (6) surrounded by the lateral wall (6b), wherein the compressed air inlet (3) is formed as a through opening through the lateral wall (6b) in a region between the base (6a) and the partition wall (4) and wherein the compressed air hence (3) reaches only into the compressed air region (2) and, for transmission to the membrane filter unit, must pass the partition wall (4), more precisely its bubble openings (5).

2. The module flow (1) according to claim 1, **characterized in that**
the partition wall (4) has a plurality of bubble openings (5).

3. The module flow (1) according to any of the foregoing claims 1 or 2, **characterized in that**
the bubble openings (5) are arranged in an annular pattern, in which a central region of the partition wall (4) has fewer bubble openings (5) than an outer region in the direction of the lateral wall (6b).

4. A device (200) for filtering crude fluid by means of at least one membrane filter unit (40), wherein the device has a filter stage (50) with at least one membrane filter unit (40) which is fluidically connected on a crude fluid side (11) to a crude fluid supply and which is configured to convey crude fluid in a filtering operation in the direction of the filter (12) through the membrane filter unit (40) in order to thus generate pure fluid on a pure fluid side, and on the pure fluid side is fluidically connected to a rinse fluid supply and which is configured to convey rinse fluid in a backflushing operation in a backflushing direction through the membrane filter unit (40), in order to purify the membrane filter unit (40) from filtered dirt particles, wherein further a feed (70) is provided for supplying shear force increasing means, in particular a compressed air feed, which is configured to inject shear force increasing means in the backflushing operation, **characterized in that** at least one module flow (1) according to any of the foregoing claims is provided, wherein the supply of shear force increasing means occurs through the module flow (1).

5. A method for filtering a crude fluid containing contaminants by means of at least one membrane filter unit (40), wherein
in a filtering operation the contaminated crude fluid is conveyed in a filtering direction (12) from a crude fluid side (11) through the membrane filter unit (40) to a pure fluid side, in order thus to generate a pure fluid substantially purified of contamination on the pure fluid side, and
in a backflushing operation a rinse fluid is conveyed in a backflushing direction through the membrane filter unit (40), in order to purify the membrane filter unit (40) from the filtered contamination, **characterized in that**
shear force increasing means are supplied through a module flow (1) according to any of the foregoing claims 1 to 3 of the membrane filter unit (40).

6. The method according to claim 5, **characterized in that** at least in the backflushing operation, a rinse water is rinsed in the backflushing direction from the outside through the membrane filter unit (40) and set against scavenging air formed as compressed air, is fed bubbling through the module flow (1) of the membrane filter unit (40).

7. The method according to claim 5 or 6, **characterized in that**
the fed bubbling compressed air increases distributed through membrane openings and/or capillaries of the membrane filter unit (40) in the direction of the module head (13) and thereby shears off dirt adhering in the membrane filter unit (40), and subsequently accumulates with the rinse water in the module head (13).

8. The use of a module flow (1) in a filter device (200) for feeding bubbling compressed air, wherein the module flow (1) is formed according to any of claims 1 to 3.

## Revendications

1. Pied modulaire (1), avec un fond (6a) et une paroi latérale (6b), pour un dispositif (200) destiné à filtrer un fluide brut au moyen d'au moins une unité de filtre à membrane (40), avec
au moins une région d'air comprimé (2) avec au moins une amenée d'air comprimé (3) et
au moins une région d'eau brute (8) avec au moins une amenée d'eau brute (10), dans lequel
la région d'eau brute (8) et la région d'air comprimé (2) sont séparées l'une de l'autre au moyen d'une paroi de séparation (4), dans lequel la paroi de séparation (4) qui s'étend respectivement jusqu'à la paroi latérale (6b) limitrophe est conçue au moins par sections avec au moins une apertures de perle (5) en tant qu'aérateur, de sorte qu'un air comprimé amené de la région d'air comprimé (2) perle dans la région d'eau brute (8) à travers la paroi de séparation (4), **caractérisé en ce que**
le pied modulaire (1) présente un logement (6) en forme de pot avec le fond (6a) et la paroi latérale (6b), dans lequel la paroi de séparation (4) est agencée dans le logement (6) à distance du fond (6a), dans lequel le fond (6a), ainsi que la paroi de séparation (4), s'étend sur la totalité de la section transversale de l'intérieur, entouré par la paroi latérale (6b), du logement (6), dans lequel l'amenée d'air comprimé (3) est conçue en tant qu'ouverture de passage à travers la paroi latérale (6b) dans une région entre le fond (6a) et la paroi de séparation (4) et dans lequel l'air comprimé parvient ainsi via l'amenée d'air comprimé (3) uniquement dans la région d'air comprimé (2) et doit, pour continuer à être amené vers l'unité de filtre à membrane, passer à travers la paroi de séparation (4) et plus précisément les apertures de perle (5) de celle-ci.

2. Pied modulaire (1) selon la revendication 1, **caractérisé en ce que**
la paroi de séparation (4) présente plusieurs apertures de perle (5).

3. Pied modulaire (1) selon l'une des revendications précédentes 1 ou 2, **caractérisé en ce que**
les apertures de perle (5) sont agencées dans un motif en forme d'anneau, où une région centrale de la paroi de séparation (4) présente moins d'apertures de perle (5) qu'une région extérieure dans la direction de paroi latérale (6b).

4. Dispositif (200) destiné à filtrer un fluide brut au moyen d'au moins une unité de filtre à membrane (40), dans lequel le dispositif présente un étage de filtrage (50) avec au moins une unité de filtre à membrane (40), lequel étage est fluidiquement relié à une amenée de fluide brut sur un côté de fluide brut (11) et conçu pour acheminer, dans un fonctionnement de filtrage, un fluide brut à travers l'unité de filtre à membrane (40) dans la direction de filtrage (12) pour ainsi produire un fluide pur sur un côté de fluide pur, et lequel étage est fluidiquement relié à une amenée de fluide de rinçage sur le côté de fluide pur et conçu pour acheminer, dans un fonctionnement de rétro-rinçage, un fluide de rinçage à travers l'unité de filtre à membrane (40) dans une direction de rétro-rinçage pour nettoyer l'unité de filtre à membrane (40) de particules de saleté filtrées, dans lequel une amenée (70) est en outre prévue pour l'amenée de moyens augmentant la force de cisaillement, en particulier une amenée d'air comprimé, laquelle amenée est conçue pour insuffler, en fonctionnement de rétro-rinçage, des moyens augmentant la force de cisaillement, **caractérisé en ce qu'**au moins un pied modulaire (1) selon l'une des revendications précédentes est prévu, dans lequel l'amenée de moyens augmentant la force de cisaillement s'effectue à travers le pied modulaire (1).

5. Procédé destiné à filtrer un fluide brut qui contient des salissures au moyen d'au moins une unité de filtre à membrane (40), dans lequel
dans un fonctionnement de filtrage, le fluide brut souillé est acheminé depuis un côté de fluide brut (11) dans une direction de filtrage (12) à travers l'unité de filtre à membrane (40) vers un côté de fluide pur pour ainsi produire sur le côté de fluide pur un fluide pur essentiellement nettoyé de salissures, et
dans un fonctionnement de rétro-rinçage, un fluide de rinçage est acheminé à travers l'unité de filtre à membrane (40) dans une direction de rétro-rinçage pour nettoyer l'unité de filtre à membrane (40) des salissures filtrées, **caractérisé en ce que**
des moyens augmentant la force de cisaillement sont amenés à travers un pied modulaire (1) selon l'une des revendications précédentes 1 à 3 de l'unité de filtre à membrane (40).

6. Procédé selon la revendication 5, **caractérisé en ce que**
au moins dans le fonctionnement de rétro-rinçage, une eau de rinçage est nettoyée dans la direction de rétro-rinçage depuis l'extérieur par l'unité de filtre à membrane (40) et est amenée, en étant opposée à un air de rinçage conçu en tant qu'air comprimé, en perlant à travers le pied modulaire (1) vers l'unité de filtre à membrane (40).

7. Procédé selon la revendication 5 ou 6, **caractérisé en ce que**
l'air comprimé perlant amené grimpe dans la direction de la tête modulaire (13) en étant réparti à travers des ouvertures de membrane et/ou des tubes capillaires de l'unité de filtre à membrane (40) et ce faisant cisaille la saleté adhérente dans l'unité de filtre à membrane (40), puis s'agglomère avec l'eau de rinçage dans la tête modulaire (13).

8. Utilisation d'un pied modulaire (1) dans un dispositif de filtrage (200) pour une amenée perlée d'air comprimé, dans lequel le pied modulaire (1) est conçu selon l'une des revendications 1 à 3.
